(19) Europäisches Patentamt
European Patent Office
Office européen des brevets

(11) EP 3 495 457 A1

(12) **EUROPEAN PATENT APPLICATION**
published in accordance with Art. 153(4) EPC

(43) Date of publication:
**12.06.2019 Bulletin 2019/24**

(21) Application number: **16912020.1**

(22) Date of filing: **09.08.2016**

(51) Int Cl.:
*C10L 3/00* (2006.01)      *C25B 1/04* (2006.01)

(86) International application number:
**PCT/CN2016/094187**

(87) International publication number:
**WO 2018/027565 (15.02.2018 Gazette 2018/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority:  07.08.2016  CN 201610639852
07.08.2016  CN 201610639542
07.08.2016  CN 201610639890
07.08.2016  CN 201610639543
07.08.2016  CN 201610639781
07.08.2016  CN 201610639889
07.08.2016  CN 201610639888

(71) Applicant: **Yulinghua Technology Co. Ltd Wuhan, Hubei 430000 (CN)**

(72) Inventor: **ZHU, Guanghua Beijing 100080 (CN)**

(74) Representative: **Franke, Dirk Franke & Partner Patent- und Rechtsanwälte Widenmayerstraße 25 80538 München (DE)**

(54) **METHOD AND SYSTEM FOR PREPARING SAFE HIGH HEATING VALUE FUEL GAS**

(57)     A method and a system for preparing a safe high heating value fuel gas. In the method, the hydrogen, oxygen and water generated by means of electrolysis are formed into molecular groups by means of hydrogen bond resonance within water molecules. The molecular groups are reformed by using a reforming liquid to obtain a high heating value fuel gas, wherein the reforming liquid comprises hydrocarbon $C_xH_{2x+2}$ and/or hydrocarbon $C_xH_{2x+2}O$. The high heating value fuel gas prepared by the aforementioned method is safe, easily stored, high in heating value while having no impact on the environment.

Fig.1

EP 3 495 457 A1

**Description**

TECHNICAL FIELD OF THE INVENTIION

Embodiments of the invention relate to gas preparation method and system, belong to field of new energy, in particular to a method and system for preparing fuel gas with high heat value and safety.

BACKGROUND OF THE INVENTIION

Nowadays, the world is still in the era of fossil energy economy dominated by oil, natural gas and coal. This era of fossil energy economy is bound to come to an end, and an unprecedented new energy revolution has begun. The new energy economy that replaces the fossil energy economy, or the new energy economy in the post-oil era will be "hydrogen economy", "low-carbon economy" and new energy economy in which the modern utilization of diversified energy sources, such as nuclear energy, solar energy, wind energy, hydropower, biomass energy and geothermal energy, will complement each other.

Elemental hydrogen is usually composed of diatomic molecules of hydrogen, which is the lightest gas, weighing only 0.09 grams per liter of hydrogen at zero centigrade and one atmospheric pressure, which is equal to 1/14.5 of weight of same volume of air. Hydrogen is easily combustible and has the lowest flash point of all substances (flash point<-253 °C, which can be considered as no flash point). Hydrogen has the lowest ignition energy, that is, 0.021mJ=0.005mcal, which is 1/14 of 0.30mJ of gasoline ignition energy. Hydrogen has the widest combustible range in air, with a volume content of 4% to 75% (1.3% to 7.6% for gasoline). Hydrogen burns fastest in air at 250cm/s (45cm/s for gasoline). Boiling point of hydrogen is -252.9 °C, and melting point thereof is -259.1 °C, which is close to the thermodynamic temperature, -273°C. Mass calorific value (low caloric value) of water vapor synthesized from hydrogen and oxygen gasification is the highest of all combustible materials, which is 120 MJ/kg and 2.76 times that of gasoline low caloric value 43.5 MJ/kg. Hydrogen and oxygen have many special properties, are best optimal clean energy as energy fuel.

However, there are still many challenging problems, especially with regard to storage, transport and security, and there are still many technical obstacles.

Firstly, cost of producing hydrogen from electrolytic water is relatively high. Theoretical electricity consumed from preparing 1 kg hydrogen and 0.5 kg oxygen under the standard condition is 2390 Ah. Theoretical energy consumption is W=I*E=2390/1000*1.23=2.95KWh (1.23V is water decomposing voltage). Actual power consumption and decomposition voltage of the electrolytic cell are both higher than theoretical values. According to the structure and operation of the electrolytic cell, actual operating voltage is generally 1.5-2 times of theoretical decomposition voltage. At present, the actual electric energy consumption for the production of 1 standard cubic meter of hydrogen and 0.5 standard cubic meter of oxygen by electrolytic water hydrogen production equipment is 5 KWhs, which is larger than theoretical value. It can be seen that the cost of using electrolytic water to produce hydrogen is relatively high, and there is no cost advantage compared with other fuels from the economic point of view.

Secondly, safety of hydrogen is poor. Because hydrogen is a kind of volatile, combustible and explosive material, unsafe factors are also the main problems limiting its application. Experiments show that: (1) combustion limit of hydrogen in air is very wide, in that when hydrogen content reaches 4 to 70% of volume ratio, it can burn, which is much wider range than gasoline combustion limit of 1.3% to 7.6%; (2) minimum energy required to ignite hydrogen is only 0.005mcal, and since there in no color when hydrogen is burned, it is difficult to detect; (3) high pressure hydrogen and low temperature liquid hydrogen are likely to leak, and the storage requirements are strict.

It can be seen that there are still many problems in low-cost production, safe storage and transportation, and other technical problems for hydrogen energy, but hydrogen energy has outstanding advantages: first, it is clean and environmentally friendly; second, it has a wide range of raw materials for production, which is free of dependence on petrochemical energy. Therefore, how to prepare, store, transport and apply hydrogen energy safely and efficiently has become challenging problem to be solved in the world.

SUMMARY OF THE INVENTION

The technical problem to be solved by embodiments of the invention is the problems of high cost and low safety existing in the traditional hydro dissociation hydrogen and oxygen mixture gas generator. A purpose of embodiments of the invention is to provide a method and system for preparing fuel gas with high heat value and safety, with balance gas-liquid exchange, easy gas discharge, lower energy consumption, safety and reliability. Fuel gas with high heat value prepared by the method and the system has the advantages of good safety, easy storage, high calorific value and no pollution to the environment.

In order to solve the above problems, according to one aspect of embodiments of the present invention, a method for preparing fuel gas with high heat value and safety is provided.

Hydrogen and oxygen produced by electrolysis are molecularly bonded with water, through hydrogen bond resonance within molecule of the water, to form a molecular cluster, general formula of which is $(H_3O^+\text{-}O_2\text{-}OH^-\text{-}H_2)_n$, wherein $1 \leq n \leq 36$.

Reforming liquid is used to reform the molecular cluster, and mixed type of fuel gas with high heat value including $H_2$ and $O_2$ is obtained.

Preferably, in the method for preparing fuel gas with high heat value and safety, the reforming is mixed reforming of interface of gas-liquid phases by contact mass transfer and chemical reaction.

Preferably, in the method for preparing fuel gas with high heat value and safety, the reforming liquid is such reforming liquid comprising hydrocarbon compound $C_xH_{2x+2}$ and/or carbon hydrogen oxide compound $C_xH_{2x+2}O$.

Preferably, in the method for preparing fuel gas with high heat value and safety, the reforming liquid also includes quantum carbon additives, wherein the quantum carbon is graphene fluid of 0.3nm-1.0nm, basic parameters of quantum carbon liquid are that: pH is 1.8-2.2; electromotive force ORP is 280mv-380mv; electrical conductivity is 1.2ms/cm-5.0ms/cm; solid content is 0.1%-0.8%.

Preferably, in the method for preparing fuel gas with high heat value and safety, natural frequency of vibration excitation device for vibration excitation follows the equation:

$$f = \frac{0.162h}{L^2}\sqrt{\frac{E}{P}}$$

wherein f is natural frequency of the vibration excitation device; h is thickness of the vibration excitation device; L is the length of the vibration excitation device; E is the elastic modulus of the vibration excitation device; P is the density of the vibration excitation device.

Preferably, in the method for preparing fuel gas with high heat value and safety, the mixed type of fuel gas with high heat value includes: $C_nH_{2n+2}$ gas, wherein $15>n>0$.

Preferably, in the method for preparing fuel gas with high heat value and safety, the fuel gas with high heat value includes the following volume components: $H_2$: 20%~60%; $O_2$: 10%~30%; $C_nH_{2n+2}$ ($5>n\geq1$): 15%~30%; $C_nH_{2n+}$($n\geq6$): 5%~25%.

In order to solve the above problems, according to another aspect of this invention, it is provided a system for preparing fuel gas with high heat value and safety, including: a water ion electrolysis device with rotation electrode plate; a fuel gas reforming device connected with the water ion electrolysis device, including hydrocarbon compound reforming liquid, wherein a vibration excitation device is set on the rotation electrode plate.

Preferably, in the system for preparing fuel gas with high heat value and safety, natural frequency of the vibration excitation device follows the equation:

$$f = \frac{0.162h}{L^2}\sqrt{\frac{E}{P}}$$

wherein f is natural frequency of the vibration excitation device; h is thickness of the vibration excitation device; L is the length of the vibration excitation device; E is the elastic modulus of the vibration excitation device; P is the density of the vibration excitation device.

Preferably, in the system for preparing fuel gas with high heat value and safety, the gas-liquid exchange layer is set in the fuel gas reforming device, and the gas-liquid exchange layer is located in the reforming liquid, and gas leading into the fuel gas reforming device is then exported through the gas-liquid exchange layer.

Therefore, compared with the existing technology, the present invention has the following advantages:

(1) good safety: through excitation principle, the monomolecular hydrogen and oxygen gas and the water molecule are recombined by hydrogen bond to reform new molecular clusters, combustion temperature is above 3500 °C, and is deflagration combustion, which is safe and stable in a closed space, as compared to explosive combustion;
(2) easy storage: new molecular can be liquefied into liquid fuel at a temperature point between -90°C and -190°C at same time, which can withstand pressure above 200kg/cm$^3$ for a long time storage without any change of properties;

(3) more environmental protection: without sulfur S and nitrogen N, calorific value can reach 11000 to 51000 Kcal/m$^3$; compared with conventional fuel, energy saving and economy can be improved by more than 50%, which has characteristics of clean, environmental-friendly, high calorific value and multipurpose.

DESCRIPTION OF THE FIGURES

Fig.1 shows principle for fuel gas with high heat value synthesis;
Fig.2 shows a control system for fuel gas with high heat value preparation;
Fig.3 is a schematic diagram of the system for preparing a fuel gas with high heat value with a fuel gas compression device;
Fig.4 shows connection of the water ion electrolysis device and the fuel gas compression device;
Fig.5 is a schematic diagram of the system for preparing a fuel gas with high heat value with a fuel gas reforming device;
Fig.6 shows connection of the water ion electrolysis device, the fuel gas reforming device and the combustion device;
Fig.7 is a schematic diagram showing a single side combination using two DC power generating devices and a water ion electrolysis device;
Fig.8 is a schematic diagram showing a single side combination using single DC power generating devices and a water ion electrolysis device;
Fig.9 is a schematic diagram showing the water ion electrolysis device;
Fig. 10 is a partial schematic diagram showing the water ion electrolysis device;
Fig.11-1 is a main view of a rotation electrode plate of the water ion electrolysis device;
Fig.11-2 is a side view of the rotation electrode plate of the water ion electrolysis device;
Fig.11-3 is a schematic diagram showing connection of the vibration excitation device of the rotation electrode plate of the water ion electrolysis device;
Fig. 12-1 is a main view of the positive and negative electrode plates of the water ion electrolysis device;
Fig.12-2 is a side view of the positive and negative electrode plates of the water ion electrolysis device;
Fig. 13 is a schematic diagram of a DC power generating device;
Fig.14-1 is a main view of the rotor magnet of the DC power generating device;
Fig.14-2 is a side view of the rotor magnet of the DC power generating device;
Fig.15-1 is a main view of the stator metal plate of the DC power generating device;
Fig.15-2 is a side view of the stator metal plate of the DC power generating device;
Fig.16 is a schematic diagram showing results of chromatographic analysis of embodiment 1;
Fig.17 shows chromatographic analysis record of embodiment 1.

In the figures, reference numerals are as following: DC power generating device 1, housing 1-1, rotor magnet 1-2, stator metal plate 1-3, fixed part 1-4, insulation bracket 1-5, water ion electrolysis device 2, moving shaft 2-1, insulation disk 2-2, electrolytic device housing 2-3, rotation electrode plate 2-4, vibration excitation device 2-4-1, fixing bolt 2-4-2, heat dissipation tube 2-5, gas-liquid separation and control tank 2-6, low pressure limiting gauge 2-7, high pressure limiting gauge 2-8, safety valve 2-9, material adding inlet 2-10, gas outlet 2-11, electrolyte 2-12, system pipe 2-13, air-cooled blade fan 2-14, system circulating pump 2-15, insulation electroplate 2-16, positive and negative electrode plates 2-17, fuel gas compression device 3, pressure gauge system 3-1, storage tank 3-2; motor 4; fuel gas reforming device 5, gas reforming device tank 5-1, reforming liquid 5-2, gas-liquid exchange layer 5-3; combustion device 6.

DETAILED DESCRIPTION OF THE INVENTION

The technical scheme of the invention is further explained with embodiments and the accompanying drawings.

1. Preparation method

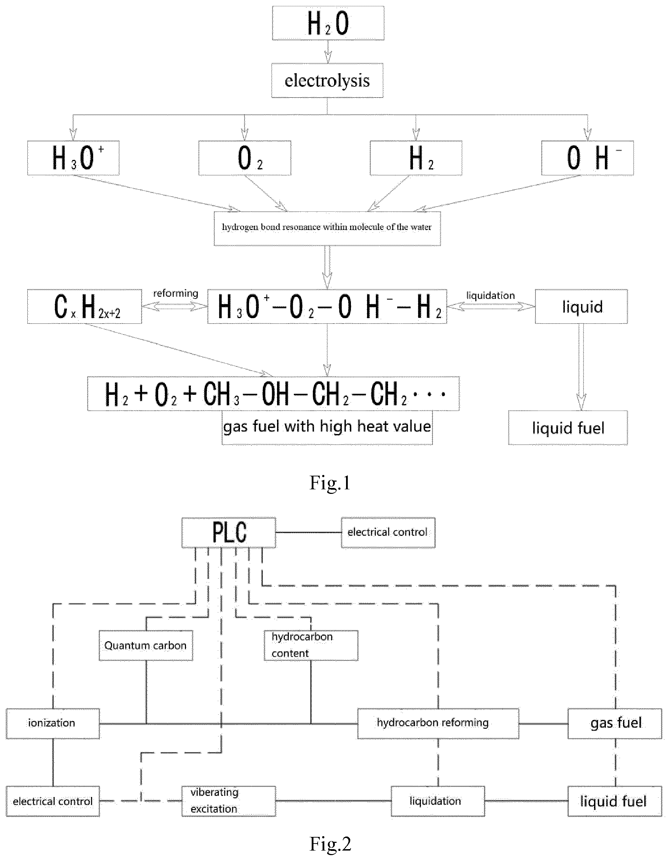

Fig.1 shows a schematic diagram of principle of the preparation method of an embodiment of the present invention. Hydrogen and oxygen gas produced by existing water electrolysis hydrogen-oxygen mixture gas generator are all mixed gases of single-substance gas, and there are some potential dangers in mixing of hydrogen and oxygen single-substance gas.

According to the method of an embodiment of the invention, in process from electrolytic water ionization to generation of hydrogen and oxygen gas, single-molecules of water, hydrogen and oxygen is bonded to form a new molecular cluster by molecular bonding, and the hydrogen molecule with high activity is bound in the molecular cluster.

Therefore, proportion of hydrogen and oxygen molecules in the new molecular cluster is very stable, and will be reduced to water in combustion, which belongs to deflagration combustion. In a closed space, deflagration combustion is very safe relative to explosive combustion.

The combustion temperature of the new molecular cluster is above 3500 °C, and it can be liquefied into liquid fuel, which can withstand pressure more than 200kg/cm$^3$, and there will be no nature change for long term storage.

In implementing this method, electrolyte can be KOH with concentration of 5% to 30%, and general formula of the molecular cluster from bond is $(H_3O^+\text{-}O_2\text{-}OH^-\text{-}H_2)_n$, wherein $1 \leq n \leq 36$.

The reforming liquid is reforming liquid consisting of hydrocarbon $C_xH_{2x+2}$ and/or carbon hydrogen oxygen mixed compound $C_xH_{2x+2}O$. Quantum carbon can also be added as additive, wherein the quantum carbon is graphene liquid of 0.3nm-1.0nm, basic parameters of which are: pH is 1.8 to 2.2; electromotive force ORP is 280mv to 380mv; electrical conductivity is 1.2ms/cm to 5.0ms/cm; solid content is 0.1% to 0.8%.

In this method, natural frequency of vibration excitation device for vibration excitation follows the equation:

$$f = \frac{0.162h}{L^2}\sqrt{\frac{E}{P}}$$

wherein f is (natural) frequency of the vibration excitation device; h is thickness of the vibration excitation device (mm); L is the length of the vibration excitation device (mm); E is the elastic modulus of the vibration excitation device; P is the density of the vibration excitation device; vibration excitation frequency can be adjusted among 10 to 3000Hz.

2. Preparation system

An embodiment of this invention provides a system for preparing fuel gas with high heat value and safety. The detailed description is as follows.

1) Overall structure

As shown in Figs.2-6, overall structure of the system includes: a DC power generating device 1, a water ion electrolysis device 2, a fuel gas compression device 3, and a fuel gas reforming device 5.

Fig. 2 shows a control system of this system. The control system is used for data collection and automatic management for time points, pressure, temperature, material supply, fuel gas compression parameters, combustion parameters, and etc.

2) Compression device

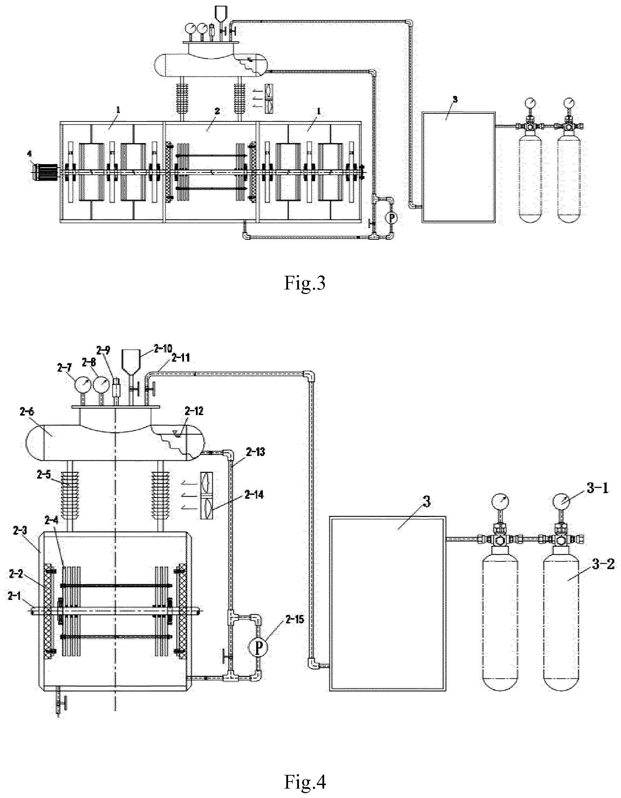

As shown in Figs.3-4, the molecular cluster produced by the vibration excitation of the system during electrolysis can be compressed and stored by the compression device, which includes: a pressure gauge system 3-1, a storage tank 3-2 and a gas compression chamber connected to a gas outlet 2-11 of the water ion electrolysis device 2. Fuel gas compression system is conventional equipment, with pressure range of 20.7-24.8Mpa, and the storage tank 3-2 is a standard gas tank.

3) Reforming device

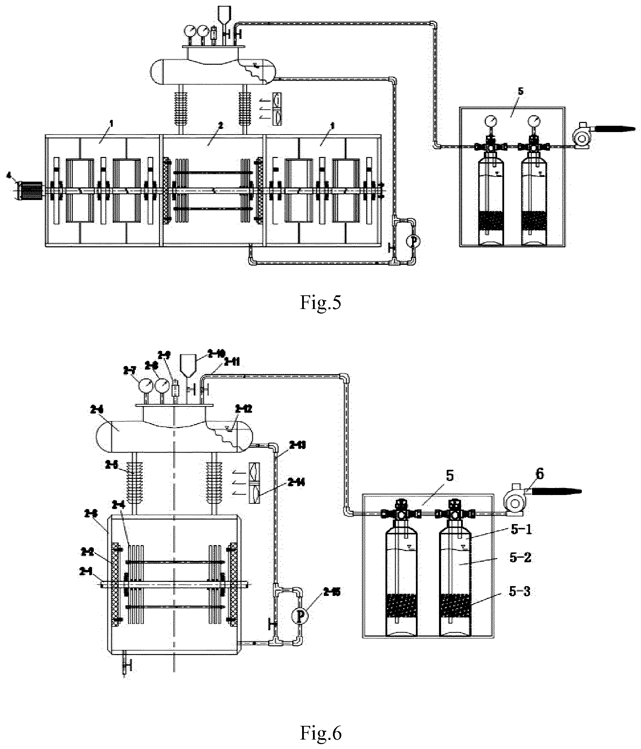

As shown in Figs.5-6, the molecular cluster needs to be reformed during combustion. The gas is passed through a reforming device tank 5-1 into a combustion device 6, which is a conventional device.

Multiple reformers 5 can be used for reforming. The reforming device tank 5-1 is provided with reforming liquid 5-2 and a gas-liquid exchange layer 5-3. The reforming liquid 5-2 is hydrocarbon compound. The gas-liquid exchange layer 5-3 is fiber body, such as felt, glass fiber, and heterotypic plastic particles. Steel ball can also be used as the gas-liquid exchange layer 5-3. The gas to the interior of the reforming device is then derived from the gas-liquid exchange layer. A gas inlet of the fuel gas reforming device tank 5-1 is under the gas-liquid exchange layer 5-3 via air pipe, and a gas outlet thereof is located above liquid surface of the reformer 5-2.

The reforming liquid 5-2 is reforming liquid consisting of hydrocarbon $C_xH_{2x+2}$ and/or carbon hydrogen oxygen mixed compound $C_xH_{2x+2}O$. Quantum carbon can also be added as additive, wherein the quantum carbon is graphene liquid of 0.3nm-1.0nm, basic parameters of which are: pH is 1.8 to 2.2; electromotive force ORP is 280mv to 380mv; electrical conductivity is 1.2ms/cm to 5.0ms/cm; solid content is 0.1% to 0.8%.

The fuel gas with high heat value prepared by the embodiment of the invention does not contain sulfur S or nitrogen N components, and heat value can reach 11000~51000 Kcal/m$^3$.

4) electrolysis device

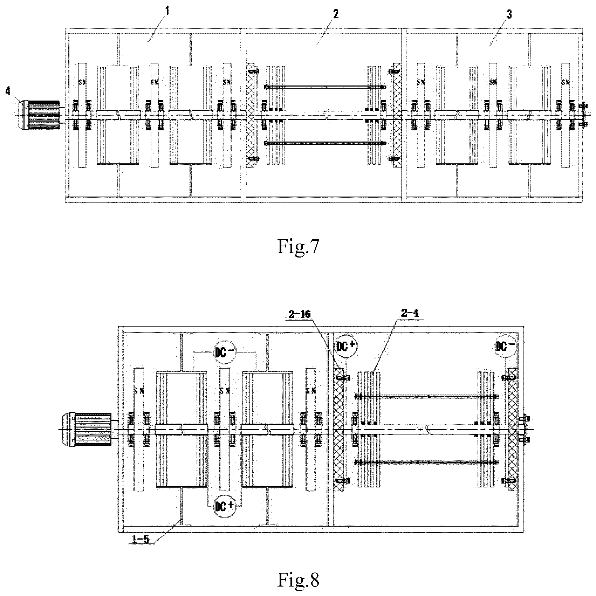

As shown in Figs.7-8, the present embodiment may use two DC power generating devices 1 for electrolysis, as shown in Fig. 7; or a single DC generator 1 for electrolysis can be used, as shown in fig. 8. Either case could be applied according to working conditions.

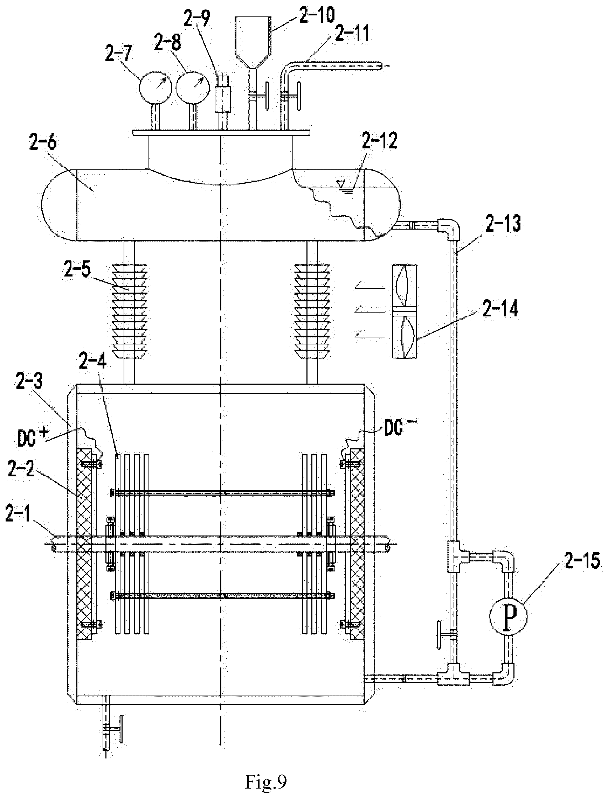

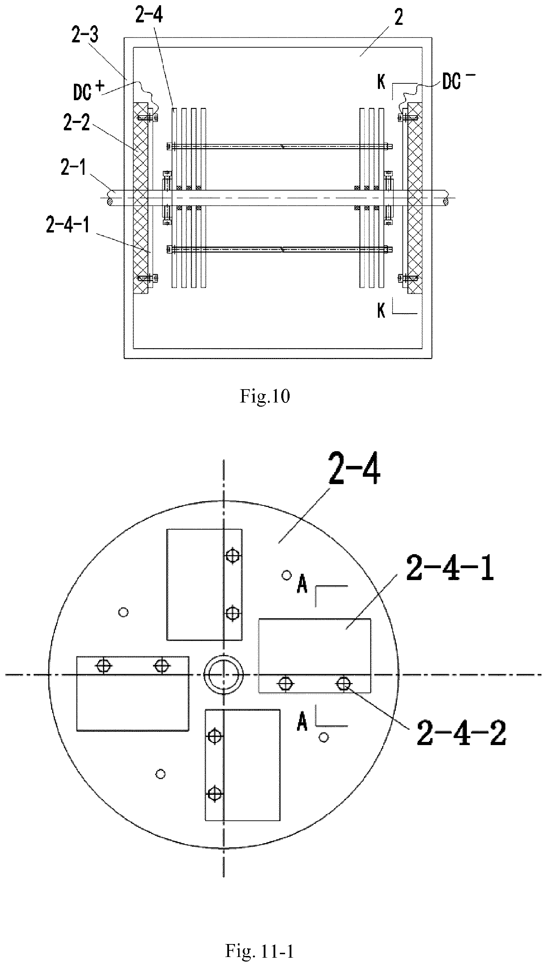

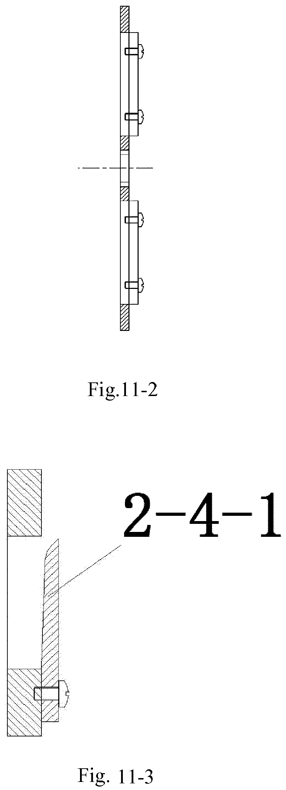

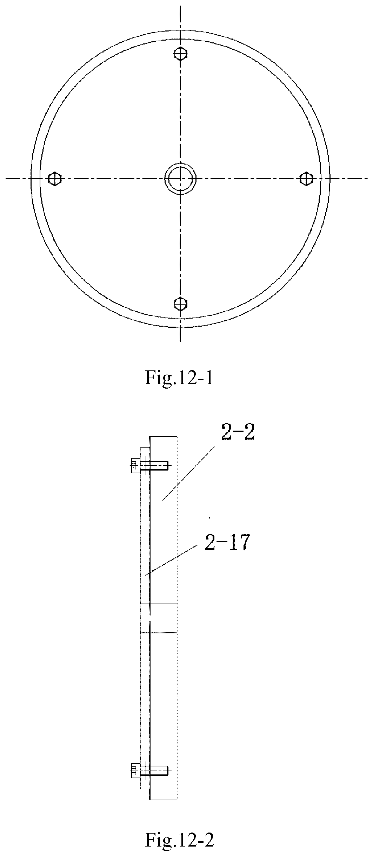

The water ion electrolysis device is shown in Figs.9-12. The water ion electrolysis device 2 includes a moving shaft 2-1, an insulating disk 2-2, a housing 2-3, a rotation electrode plate 2-4, an exciting device 2-4-1, at least one group of heat dissipation tubes 2-5, a gas-liquid separation and control tank 2-6, a low pressure limiting gauge 2-7, a high pressure limiting gauge 2-8, a safety valve 2-9, a material adding inlet 2-10, a gas outlet 2-11, electrolyte 2-12, system pipe 2-13, air-cooled blade fans 2-14, a system circulating pump 2-15, positive and negative electrode plates 2-17.

Opposite sides of the inner wall of the housing 2-3 of the electrolytic device is respectively provided with two insulating disks 2-2, on which the positive and negative electrode plates 2-17 are arranged respectively. The rotation electrode plate 2-4 is arranged in the middle of two positive and negative electrode plates 2-17 through the moving shaft 2-1.

Top part of the housing 2-3 of the electrolytic device is connected with the gas-liquid separation and control tank 2-6 through the heat dissipation tube 2-5, and liquid recovery outlet of the gas-liquid separation and control tank 2-6 is connected to inner part of the housing 2-3 of the electrolytic device through the system pipe 2-13; gas outlet 2-11 of the gas-liquid separation and control tank 2-6 is connected with the fuel gas compression device 3 and the fuel gas reforming device 5.

The gas-liquid separation and control tank 2-6 is provided with a low pressure limiting gauge 2-7, a high pressure limiting gauge 2-8, a safety valve 2-9, a material adding inlet 2-10. The heat dissipation tube 2-5 is preferably a corrugated tube, and side thereof is equipped with air-cooled blade fans 2-14 for heat dissipation therefor.

There should be at least one piece of the rotation electrode plate 2-4, which can also be a plurality of plates forming electrodes group, with interval of 1-10mm each. Each rotation electrode plate 2-4 is provided several exciting devices 2-4-1 which can be fixed on the rotation electrode plate 2-4 by a fixed bolt 2-4-2.

The rotation electrode plate 2-4 rotates at a certain angular speed in electrolyte 2-12, and under function of electrode powers DC+ and DC- of positive and negative electrode plates 2-17, hydrogen and oxygen gas of water electrolysis is produced.

The rotation electrode plate 2-4 drives the exciting device 2-4-1 to excite vibration in rotation, and the natural frequency of the exciting device follows the equation:

$$f = \frac{0.162h}{L^2}\sqrt{\frac{E}{P}}$$

wherein f is natural frequency of the vibration excitation device; h is thickness (mm) of the vibration excitation device; L is the length (mm) of the vibration excitation device; E is the elastic modulus (GPa) of the vibration excitation device; P is the density of the vibration excitation device; vibration excitation frequency can be adjusted among 10-3000Hz. The exciting device 2-4-1 of the embodiment of the invention is an exciting plate. Under the function of exciting frequency, single-molecule hydrogen oxygen gas and water molecule produced from the positive and negative electrodes on the exciting plate are reassembled into a new molecular cluster through hydrogen bond.

The new molecular cluster and electrolytes pass through the heat dissipation tube 2-5 to the gas-liquid separation and control tank 2-6 for gas-liquid separation. The separated gas is exported through the outlet 2-11. The low pressure limiting gauge 2-7 and the high pressure limiting gauge 2-8 are responsible for keeping the pressure running between the 0.01-1.0Mpa. Material adding inlet 2-10 is responsible for the addition of fluids and additives, safety valve 2-9 is controlled at 1.5-2.0 MPa, pipe 2-13 is system automatic circulation pipe, according to working conditions such as temperature control, the circulating pump 2-15 can be turned on.

5) Power generating device

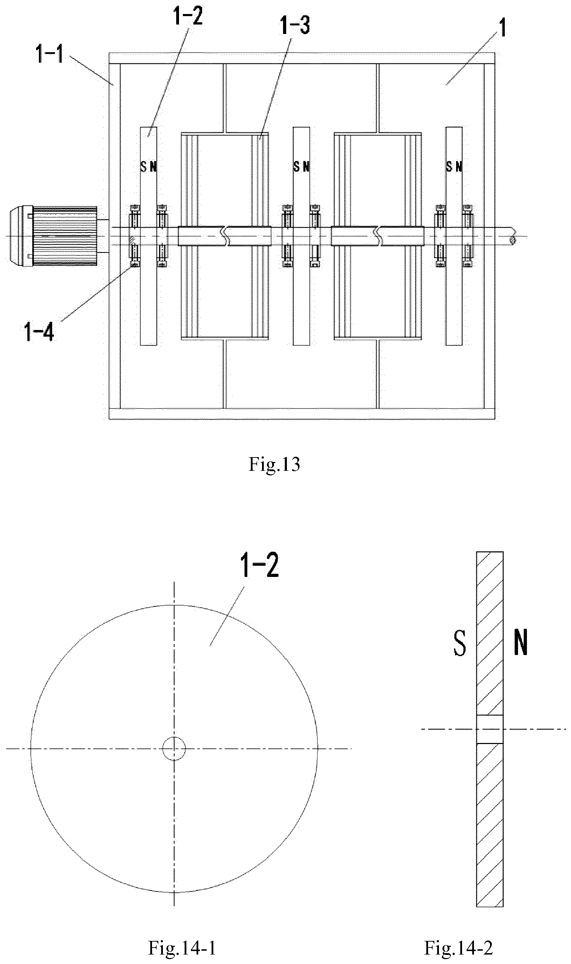

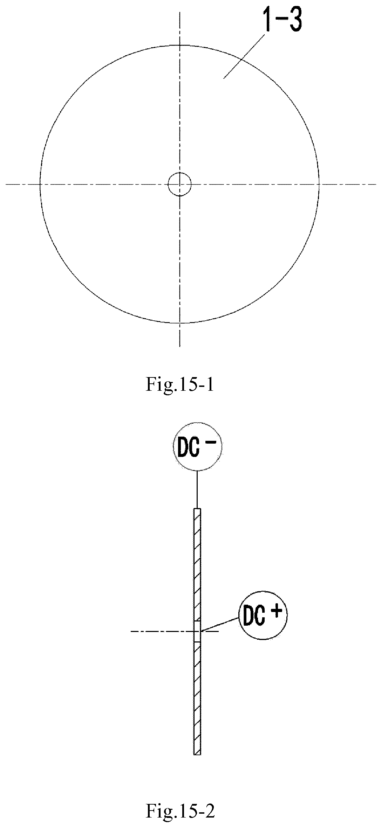

The DC power generating device, shown in Figs. 13-15, comprises a housing 1-1, a rotor magnet 1-2, a stator metal plate 1-3, fixed part 1-4, insulation bracket 1-5, and a motor 4. Leading wire connection at top of the metal plate is DC-, and leading wire connection on central axis of the metal plate is DC+. The rotor magnet disk 1-2 is a conductive metal disk, and the metal may be copper and copper alloy or conductive metal, formed by at least one pieces; the rotor magnet 1-2 is a high-flux magnet with a magnetic flux between 0.5-1.2T tesla, at least one stator metal disks 1-3 are clamped between two plates thereof.

FM motor 4 provides kinetic energy with a certain speed, the kinetic energy is converted from DC power generating device 1 to rated DC electrolysis power to be supplied to the water ion electrolysis device 2.

6) Implementation effect

The method for preparing fuel gas with high heat value according to embodiments of the invention relates to implosive combustion, which is relatively safer than explosive combustion in a closed space, and has property of safety and stability which is superior to that of other gas; new molecular clusters are liquefied into liquid fuels at a certain temperature point; combustion temperature is above 3500°C; it can withstand pressure above $200kg/cm^3$ and can be stored for a long time without any change in properties.

The fuel gas with high heat value prepared by the embodiments of the invention can be compared with other conventional fuels as follows:

Table 1-comparison of calorific and carbon dioxide emissions between the reforming gas and other fuels

| Fuel type | Quantity KG | Heat value Kcal | $CO_2$ emission reduction% |
|---|---|---|---|
| LPG | 1 | 11000 | 20 |
| heavy oil | 1 | 10000 | 75 |
| diesel oil | 1 | 9600 | 60 |
| coal | 1 | 5000 | 90 |
| electric energy | 1KW | 860 | commutation |
| natural gas | 1 | 8000 | 20 |
| reforming gas of embodiments of the invention | 1 | 11000-51000 | Less than 5% |

Beneficial effects of the invention can be verified by several embodiments as below.

Embodiment 1

Electric ion of water: mixture substances of $H_3O^++HO^-$ proton hydrate ionized by $H_2O+H_2O \rightleftarrows H_3O^++HO^-$ and hydroxyl ion are combined and reformed with hydrocarbon alkanes.

The electrolyte 2-12 can be selected as KOH with concentration of 5% to 30%, preferably 15%. The reforming liquid 2-21 is composed of a mixture containing C1-C5 alcohols.

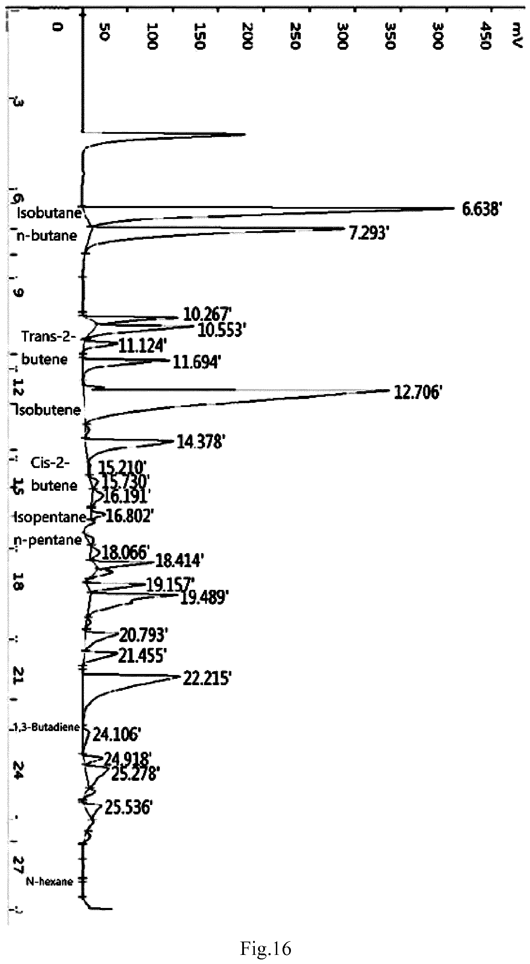

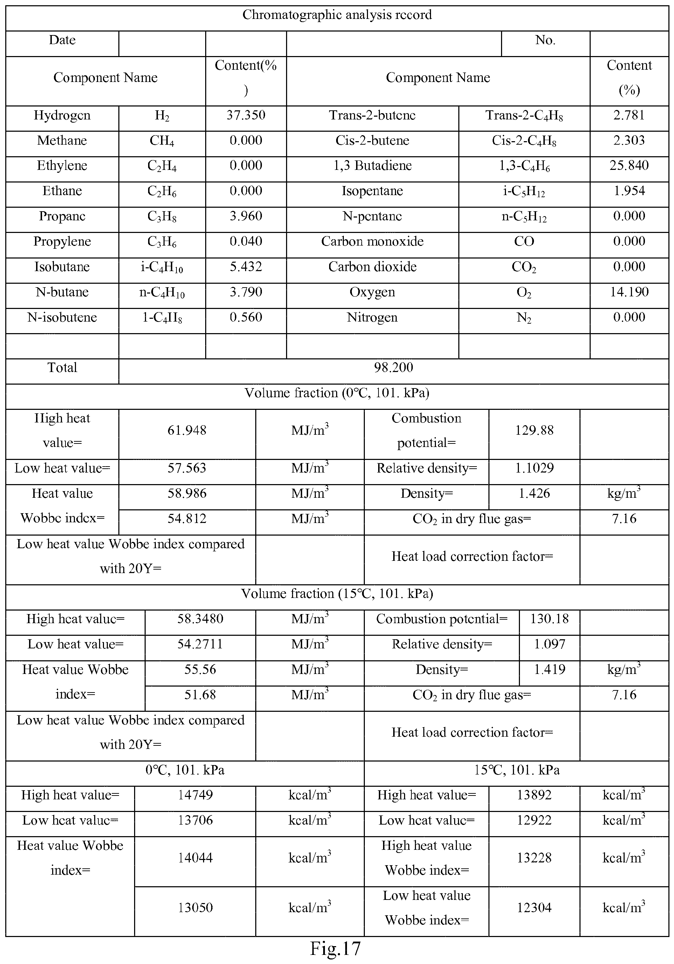

The molecular gas composition of the hydrocarbon structure prepared according to the method in the present embodiment 1 is detected and analyzed, chromatographic analysis result thereof is shown in Fig.16; chromatographic analysis record thereof is shown in Fig.17. The results of detection and analysis show that the gas is composed of a variety of hydrocarbon structures, calorific value thereof is above $12000Kcal/m^3$.

Embodiment 2

Electric ion of water: mixture substances of $H_3O^++HO^-$ proton hydrate ionized by $H_2O+H_2O \rightleftarrows H_3O^++HO^-$ and hydroxyl ion are combined and reformed with hydrocarbon alkane.

The electrolyte 2-12 can be selected as KOH with concentration of 5% to 30%, preferably 20%. The reforming liquid 2-21 is hydrocarbon compound which is selected as a mixture of C3-C8 alkane.

The molecular gas composition of the hydrocarbon structure before and after the reforming is shown in the table below. It can be seen from the table that, similarly, the hydrocarbon structure with multi components has a calorific value above $30000Kcal/m^3$.

Table 2- table of analysis of molecular gas composition of hydrocarbon structure before and after reforming

| Composition | Reforming mixing gas % | remarks |
|---|---|---|
| $H_2$ | 39.50 | |
| $O_2$ | 19.03 | |
| $CH_4$ | 4.05 | |
| CO | ND | Not detected |
| $CO_2$ | ND | Not detected |
| $C_2H_6$ | 0.5 | |
| $C_3H_8$ | 11.59 | |
| $C_3H_6$ | 0.04 | |
| $i\text{-}C_4H_{10}$ | 0.55 | |
| $n\text{-}C_4H_{10}$ | 2.68 | |
| $l\text{-}C_4H_8+i\text{-}C_4H_8$ | 0.07 | molecular clusters bind tightly |
| $t\text{-}2\text{-}C_4H_8$ | 0.21 | |
| $c\text{-}2\text{-}C_4H_8$ | 0.25 | |
| $1,3\text{-}C_4H_6$ | 0.16 | |
| $i\text{-}C_5H_{12}$ | 6.82 | |
| $n\text{-}C_5H_{12}$ | 4.49 | |
| $C_6$ up | 10.06 | |
| Total % | 100 | |
| Combustion value Kcal/$m^3$ | 31000 | |

**Embodiment 3**

Electric ion of water: mixture substances of $H_3O^++HO^-$ proton hydrate ionized by $H_2O+H_2O \rightleftarrows H_3O^++HO^-$ and hydroxyl ion are combined and reformed with hydrocarbon alkanes.

The electrolyte 2-12 can be selected as KOH with concentration of 5% to 30%, preferably 30%. The reforming liquid 2-21 is hydrocarbon compound which is selected as a mixture of C5-C12 alkane. The calorific value of hydrocarbon structure with multi components obtained after reforming is above 50000Kcal/$m^3$.

The embodiments show that the safety and fuel gas with high heat value of embodiments of the invention is a clean energy source and has excellent energy saving and emission reduction effect compared with any existing conventional fuel. From the combustion performance, compared with conventional fuel, energy saving and economic saving can improved more than 50%; it can effectively control the emissions of $NO_X$, $SO_X$, $CO_2$ and other harmful gases, combustion emissions can be reduced by more than 60%. The invention is not limited to the above examples and can be applied to all applications in the field of combustion, such as conventional commercial combustion, high-pressure fuel storage tanks, liquefied storage and transportation, and so on.

The above embodiments only describe the superior selected embodiments of the invention, not limit the scope of the invention, without deviating from the design spirit of the invention, all kinds of deformation and improvement made by ordinary technicians of the invention to the technical scheme of the invention should fall within the scope of protection determined by the claim of the invention.

The specific embodiments described herein are only illustrative of the spirit of the present invention. Technical personnel in the technical field of the invention may make various modifications or additions to the specific embodiments described or replace them in a similar manner. However, it will not deviate from the spirit of the present invention or go beyond the scope defined in the appended claims.

**Claims**

1. A method for preparing fuel gas with high heat value and safety, comprising:

   molecularly bonding hydrogen and oxygen produced by electrolysis with water, through hydrogen bond resonance within molecule of the water, to form a molecular cluster, general formula of which is $(H_3O^+\text{-}O_2\text{-}OH^-\text{-}H_2)_n$, wherein $1 \leq n \leq 36$;
   reforming the molecular cluster by using reforming liquid, to obtain mixed type of fuel gas with high heat value, including $H_2$ and $O_2$.

2. The method for preparing fuel gas with high heat value and safety as in Claim 1, wherein the reforming is mixed reforming of interface of gas-liquid phases by contact mass transfer and chemical reaction.

3. The method for preparing fuel gas with high heat value and safety as in Claim 1, wherein the reforming liquid is reforming liquid comprising hydrocarbon compound $C_xH_{2x+2}$ and/or carbon hydrogen oxide compound $C_xH_{2x+2}O$.

4. The method for preparing fuel gas with high heat value and safety as in Claim 3, wherein the reforming liquid also includes quantum carbon as additive, wherein the quantum carbon is graphene fluid of 0.3nm-1.0nm, basic parameters of the quantum carbon liquid are that: pH is 1.8-2.2; electromotive force ORP is 280mv-380mv; electrical conductivity is 1.2ms/cm-5.0ms/cm; solid content is 0.1%-0.8%.

5. The method for preparing fuel gas with high heat value and safety as in Claim 1, wherein natural frequency of vibration excitation device for vibration excitation follows the equation:

$$f = \frac{0.162h}{L^2}\sqrt{\frac{E}{P}}$$

   wherein f is natural frequency of the vibration excitation device; h is thickness of the vibration excitation device; L is length of the vibration excitation device; E is elastic modulus of the vibration excitation device; P is density of the vibration excitation device.

6. The method for preparing fuel gas with high heat value and safety as in Claim 1, wherein the mixed type of fuel gas with high heat value includes: $C_nH_{2n+2}$ gas, wherein $15 > n > 0$.

7. The method for preparing fuel gas with high heat value and safety as in Claim 6, wherein the fuel gas with high heat value includes the following volume components:
   $H_2$: 20%~60%; $O_2$: 10%~30%; $C_nH_{2n+2}$ ($5 > n \geq 1$): 15%~30%; $C_nH_{2n+}$($n \geq 6$): 5%~25%.

8. A system for preparing fuel gas with high heat value and safety, including: a water ion electrolysis device with a rotation electrode plate; a fuel gas reforming device connected with the water ion electrolysis device, including hydrocarbon compound reforming liquid,
   wherein a vibration excitation device is set on the rotation electrode plate.

9. The system for preparing fuel gas with high heat value and safety as in Claim 8, wherein natural frequency of the vibration excitation device follows the equation:

$$f = \frac{0.162h}{L^2}\sqrt{\frac{E}{P}}$$

   wherein f is natural frequency of the vibration excitation device; h is thickness of the vibration excitation device, in unit of mm; L is length of the vibration excitation device, in unit of mm; E is elastic modulus of the vibration excitation device; P is density of the vibration excitation device.

10. The system for preparing fuel gas with high heat value and safety as in Claim 8, wherein a gas-liquid exchange layer is set in the fuel gas reforming device, and the gas-liquid exchange layer is located in the reforming liquid, and gas leading into the fuel gas reforming device is exported after passing through the gas-liquid exchange layer.

Fig.1

Fig.2

Fig.3

Fig.4

Fig.5

Fig.6

Fig.7

Fig.8

Fig.9

Fig.10

Fig. 11-1

Fig.11-2

2-4-1

Fig. 11-3

Fig.12-1

Fig.12-2

Fig.13

Fig.14-1                              Fig.14-2

1-3

Fig.15-1

DC −

DC +

Fig.15-2

Fig.16

| Chromatographic analysis record | | | | | | |
|---|---|---|---|---|---|---|
| Date | | | | | No. | |
| Component Name | | Content(%) | Component Name | | | Content (%) |
| Hydrogen | $H_2$ | 37.350 | Trans-2-butene | | Trans-2-$C_4H_8$ | 2.781 |
| Methane | $CH_4$ | 0.000 | Cis-2-butene | | Cis-2-$C_4H_8$ | 2.303 |
| Ethylene | $C_2H_4$ | 0.000 | 1,3 Butadiene | | 1,3-$C_4H_6$ | 25.840 |
| Ethane | $C_2H_6$ | 0.000 | Isopentane | | i-$C_5H_{12}$ | 1.954 |
| Propane | $C_3H_8$ | 3.960 | N-pentane | | n-$C_5H_{12}$ | 0.000 |
| Propylene | $C_3H_6$ | 0.040 | Carbon monoxide | | CO | 0.000 |
| Isobutane | i-$C_4H_{10}$ | 5.432 | Carbon dioxide | | $CO_2$ | 0.000 |
| N-butane | n-$C_4H_{10}$ | 3.790 | Oxygen | | $O_2$ | 14.190 |
| N-isobutene | 1-$C_4H_8$ | 0.560 | Nitrogen | | $N_2$ | 0.000 |
| | | | | | | |
| Total | | | 98.200 | | | |
| Volume fraction (0°C, 101. kPa) | | | | | | |
| High heat value= | | 61.948 | $MJ/m^3$ | Combustion potential= | 129.88 | |
| Low heat value= | | 57.563 | $MJ/m^3$ | Relative density= | 1.1029 | |
| Heat value Wobbe index= | | 58.986 | $MJ/m^3$ | Density= | 1.426 | $kg/m^3$ |
| | | 54.812 | $MJ/m^3$ | $CO_2$ in dry flue gas= | | 7.16 |
| Low heat value Wobbe index compared with 20Y= | | | | Heat load correction factor= | | |
| Volume fraction (15°C, 101. kPa) | | | | | | |
| High heat value= | | 58.3480 | $MJ/m^3$ | Combustion potential= | 130.18 | |
| Low heat value= | | 54.2711 | $MJ/m^3$ | Relative density= | 1.097 | |
| Heat value Wobbe index= | | 55.56 | $MJ/m^3$ | Density= | 1.419 | $kg/m^3$ |
| | | 51.68 | $MJ/m^3$ | $CO_2$ in dry flue gas= | | 7.16 |
| Low heat value Wobbe index compared with 20Y= | | | | Heat load correction factor= | | |
| 0°C, 101. kPa | | | | 15°C, 101. kPa | | |
| High heat value= | | 14749 | $kcal/m^3$ | High heat value= | 13892 | $kcal/m^3$ |
| Low heat value= | | 13706 | $kcal/m^3$ | Low heat value= | 12922 | $kcal/m^3$ |
| Heat value Wobbe index= | | 14044 | $kcal/m^3$ | High heat value Wobbe index= | 13228 | $kcal/m^3$ |
| | | 13050 | $kcal/m^3$ | Low heat value Wobbe index= | 12304 | $kcal/m^3$ |

Fig.17

## INTERNATIONAL SEARCH REPORT

International application No.

PCT/CN2016/094187

### A. CLASSIFICATION OF SUBJECT MATTER

C10L 3/00 (2006.01) i; C25B 1/04 (2006.01) i

According to International Patent Classification (IPC) or to both national classification and IPC

### B. FIELDS SEARCHED

Minimum documentation searched (classification system followed by classification symbols)

C10L 3/-, C25B 1/-

Documentation searched other than minimum documentation to the extent that such documents are included in the fields searched

Electronic data base consulted during the international search (name of data base and, where practicable, search terms used)

CNKI, CNPAT, DWPI, VEN: 水, 电解, 共振, 燃气, water, electroly+, syntony, resona+, sympathetic vibration, fuel, combust+, gas

### C. DOCUMENTS CONSIDERED TO BE RELEVANT

| Category* | Citation of document, with indication, where appropriate, of the relevant passages | Relevant to claim No. |
|---|---|---|
| Y | CN 104312648 A (ZHU, Guanghua et al.), 28 January 2015 (28.01.2015), claims 1 and 11, description, page 4, line 3, page 4, paragraphs 19-22 and page 5, paragraphs 28-29, and figure 5 | 1-10 |
| Y | CA 2143482 A1 (TAKESHITA, Y.), 28 August 1996 (28.08.1996), the abstract | 1-10 |
| Y | CN 204162674 U (ZHU, Guanghua et al.), 18 February 2015 (18.02.2015), claim 1, description, paragraphs 16-31, and figure 5 | 1-10 |
| Y | CN 203270043 U (FLY FISH AND WATER CO., LTD.), 06 November 2013 (06.11.2013), description, paragraphs 5-21, and figure 1 | 1-10 |
| Y | US 4265721 A (HACKMYER, S.A.), 05 May 1981 (05.05.1981), the abstract, and claim 2 | 1-10 |
| A | CN 1906330 A (HYDROGEN TECHNOLOGY APPLIC INC.), 31 January 2007 (31.01.2007), entire document | 1-10 |
| A | US 2013312327 A1 (SCHARF, J. et al.), 28 November 2013 (28.11.2013), entire document | 1-10 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 April 2017 | 11 May 2017 |

| Name and mailing address of the ISA/CN: | Authorized officer |
|---|---|
| State Intellectual Property Office of the P. R. China No. 6, Xitucheng Road, Jimenqiao Haidian District, Beijing 100088, China Facsimile No.: (86-10) 62019451 | YANG, Ying Telephone No.: (86-10) 62084851 |

Form PCT/ISA/210 (second sheet) (July 2009)

## INTERNATIONAL SEARCH REPORT
### Information on patent family members

| International application No. |
| --- |
| PCT/CN2016/094187 |

| Patent Documents referred in the Report | Publication Date | Patent Family | Publication Date |
| --- | --- | --- | --- |
| CN 104312648 A | 28 January 2015 | CN 104312648 B | 31 August 2016 |
| CA 2143482 A1 | 28 August 1996 | WO 9506144 A1 | 02 March 1995 |
| | | JPWO 1995006144S X | 23 January 1996 |
| CN 204162674 U | 18 February 2015 | None | |
| CN 203270043 U | 06 November 2013 | None | |
| US 4265721 A | 05 May 1981 | None | |
| CN 1906330 A | 31 January 2007 | US 2007080070 A1 | 12 April 2007 |
| | | CA 2552970 A1 | 25 August 2005 |
| | | WO 2005076767 A2 | 25 August 2005 |
| | | WO 2005076767 A3 | 29 December 2005 |
| | | JP 2007519827 A | 19 July 2007 |
| | | US 2006075683 A1 | 13 April 2006 |
| | | US 2004149591 A1 | 05 August 2004 |
| | | BR PI0418057 A | 17 April 2007 |
| | | EP 1711648 A4 | 29 August 2007 |
| | | MX PA06008195 A | 31 August 2006 |
| | | EP 1711648 A2 | 18 October 2006 |
| | | AU 2004315756 A1 | 20 July 2006 |
| | | IN 200604076 P1 | 22 June 2007 |
| | | US 2007151846 A1 | 05 July 2007 |
| US 2013312327 A1 | 28 November 2013 | EP 2465915 B1 | 20 February 2013 |
| | | EA 201390910 A1 | 29 November 2013 |
| | | CA 2822319 A1 | 28 June 2012 |
| | | EP 2465915 A1 | 20 June 2012 |
| | | AU 2011348525 A1 | 11 July 2013 |
| | | WO 2012084119 A1 | 28 June 2012 |
| | | EA 026312 B1 | 31 March 2017 |

Form PCT/ISA/210 (patent family annex) (July 2009)